# EUROPÄISCHE PATENTSCHRIFT

(11) **EP 1 315 634 B1**
(45) Veröffentlichungstag und Bekanntmachung des Hinweises auf die Patenterteilung: **07.04.2004**
(21) Anmeldenummer: 01980342.8
(22) Anmeldetag: 05.09.2001
(51) Int. Cl.: B60L 5/00, H02J 7/00

(54) **VERFAHREN UND VORRICHTUNG ZUR ENERGIEVERSORGUNG**
METHOD AND DEVICE FOR SUPPLYING ENERGY
PROCEDE ET DISPOSITIF D'ALIMENTATION EN ENERGIE

(30) Priorität: 06.09.2000 DE 10044553
(43) Veröffentlichungstag der Anmeldung: 04.06.2003
(73) Patentinhaber: Bombardier Transportation GmbH, 13627 Berlin (DE)
(72) Erfinder: RICHTER, Henrik, 16761 Hennigsdorf (DE)
(74) Vertreter: Meyer, Hans-Joachim
(86) Internationale Anmeldenummer: PCT/EP2001/010223
(87) Internationale Veröffentlichungsnummer: WO 2002/020299

(56) Entgegenhaltungen:
- DE-A- 4 126 624
- DE-A- 19 920 302

## Beschreibung

Die Erfindung betrifft ein Verfahren zur Energieversorgung gemäß dem Oberbegriff des Anspruchs 1 und eine Vorrichtung zur Energieversorgung gemäß dem Oberbegriff des Anspruchs 9. Die Erfindung ist geeignet für - aber nicht beschränkt auf - den Einsatz in Messund Regelungssystemen für Größen an einem Bahnstromabnehmer, deren Messung bzw. Beeinflussung potentialgetrennt erfolgen muss. Beispiel hierfür sind Messsysteme zur Messung der Kontaktkraft an Stromabnehmern. Dort ist aus Messtechnischen und sicherheitstechnischen Gründen eine vom Potential der Bahnstromabnehmer getrennte Energieversorgung erforderlich.

Für die Qualität der Stromabnahme bei elektrisch betriebenen Fahrzeugen ist die Kontaktkraft zwischen dem Fahrdraht und dem Stromabnehmer eine wesentliche Größe. Die Kontaktkraft wird mittels Messsystemen bestimmt. Ein solches Messsystem besteht beispielsweise aus Messaufnehmer, Messverstärker, Übertragungseinheit und Verarbeitungseinheit. Weiterhin ist für das Messsystem eine Stromversorgung erforderlich.

Bekannt für derartige Anwendungsfälle sind Stromversorgungen mittels Akkumulatoren. Nachteilig dabei ist jedoch eine begrenzte speicherbare Energiemenge. Während des Ladens der Akkumulatoren ist ein Abschalten und Erden des Fahrdrahtes erforderlich. Dies bedeutet einen hohen Arbeits- und Kostenaufwand.

Weiterhin ist bekannt, Solarzellen mit Akkumulatoren zu kombinieren und als Stromversorgung einzusetzen. Nachteilig ist auch hierbei eine nur geringe speicherbare Energiemenge der Akkumulatoren sowie eine geringe verfügbare Leistung der Solarzellen, da die zur Verfügung stehende Fläche begrenzt ist. Außerdem steht die für die Solarzellen erforderliche Lichtmenge nicht kontinuierlich zur Verfügung.

Des weiteren werden bisher hochspannungsfeste Spannungsübertrager eingesetzt. Die Spannungsversorgung erfolgt dabei über die Fahrdrahtspannung. Diese Lösung ist teuer und an die Verfügbarkeit der Fahrdrahtspannung gebunden.

Auch andere Anwendung benötigen eine potentialgetrennte Spannungsversorgung. Beispielsweise wird in DE 44 09 483 C1 ein Verfahren und eine Vorrichtung zur Kontrolle von Fahrdrähten beschrieben, die einen Hochfrequenz-Generator beinhalten. Die Spannungsversorgung des Hochfrequenzgenerators erfolgt mittels Akkumulatoren, ebenso wie die Spannungsversorgung des Mess- und Übertragungssystems. Nachteilig dabei ist, wie oben bereits dargestellt, eine begrenzte speicherbare Energiemenge, verbunden mit dem erforderlichen Abschalten und Erden des Fahrdrahtes während des Ladens der Akkumulatoren, was zu hohem Arbeits- und Kostenaufwand führt.

In der DE 295 02 102 Ul wird eine Messeinrichtung zur Beschreibung der Oberleitungslage offenbart. Die potentialgetrennte Spannungsversorgung der Oberleitungs-Messeinrichtung erfolgt mit Hilfe von optischen Generatoren, insbesondere Solarzellen, die wahlweise mit Tages- oder Kunstlicht betrieben werden. Auch hier treten die oben beschriebenen Nachteile einer gering verfügbaren Leistung der Solarzellen auf, da die zur Verfügung stehende Fläche begrenzt ist und die für die Solarzellen erforderliche Lichtmenge nicht kontinuierlich zur Verfügung steht.

Aufgabe der Erfindung ist es, die beschriebenen Nachteile des Standes der Technik zu beseitigen und insbesondere ein Verfahren und eine Vorrichtung zur Spannungsversorgung vorzuschlagen, bei der eine vereinfachte und ausreichend verfügbare Energieversorgung erreicht werden kann. Dabei soll ein geringer Arbeitsund Kostenaufwand erreicht werden.

Diese Aufgabe wird durch ein Verfahren zur Energieversorgung gemäß den Merkmalen des Anspruchs 1 sowie eine Vorrichtung zur Energieversorgung gemäß den Merkmalen des Anspruchs 9 gelöst.

Erfindungsgemäß erfolgt die Energieversorgung von elektrischen Verbrauchern in Fahrzeugen indem eine Druckluftversorgung mittels eines Druckluftschlauches einen Luftmotor betreibt. Der Luftmotor wandelt die Strömungsenergie in Rotationsenergie um und treibt einen Generator an. Der Generator wandelt die Rotationsenergie in elektrische Energie um und betreibt die elektrischen Verbrauchern und/oder lädt Akkumulatoren auf.

Die erfindungsgemäße Vorrichtung weist eine Druckluftversorgung, beispielsweise eine Hauptluftbehälterleitung auf, die mittels eines Druckluftschlauches an den Luftmotor angeschlossen ist.

Die Druckluft treibt den Luftmotor an, welcher die Strömungsenergie in Rotationsenergie umwandelt. Eine Welle des Luftmotors ist mittels Mitteln zur Kraftübertragung mit einer Welle des Generator verbunden und treibt diesen an. Der Generator wandelt die mechanische Energie in elektrische Energie um. Der Generator ist mit den elektrischen Verbrauchern und/oder mit Akkumulatoren verbunden.

Durch die erfindungsgemäße Lösung wird eine Vergrößerung der am Stromabnehmer zur Verfügung stehenden elektrischen Leistung erreicht. Die Verfügbarkeit der zur Verfügung stehenden elektrischen Leistung wird wesentlich erhöht. Dabei kann ein im Schienenfahrzeug im Fahrbetrieb ständig und mit ausreichendem energetischen Potential verfügbares Medium verwendet werden.

Das erfindungsgemäße Verfahren und die erfindungsgemäße Vorrichtung wird dort eingesetzt, wo die Verbraucher elektrisch leitend mit dem Stromabnehmer verbunden sind, der sich gegenüber dem Fahrzeug, insbesondere Schienenfahrzeug und dessen übrige elektrische Ausrüstung auf Hochspannungspotential befindet.

In einer Ausführungsform sind Luftmotor, Generator und elektrische Verbraucher und/oder Akkumulatoren auf einem Stromabnehmerrahmen angeordnet. Dabei ist der Druckluftschlauch wenigstens an einer Übergangsstelle zum Stromabnehmerrahmen hochspannungsfest ausgebildet.

In einer weiteren Ausführung enthält die Vorrichtung zusätzlich Mittel zur Begrenzung der Ausgangsspannung des Generators. Beispiele hierfür sind Regler am Ausgang des Generators, Fliehkraftregler am Luftmotor oder Mittel zur Steuerung der Druckluftzufuhr, insbesondere Magnetventil(e).

Der Luftmotor kann Teil eines Drehzahlregelkreises sein, so dass der Druckluftverbrauch reduziert wird.
Luftmotor und Generator können weiterhin als eine Einheit in einem Gehäuse untergebracht sein.

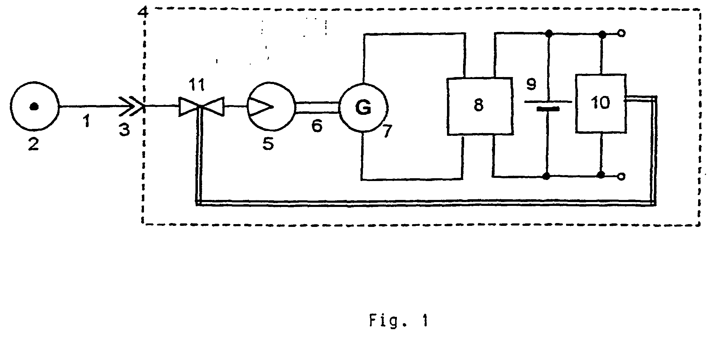

Die Erfindung wird anhand des in Fig. 1 dargestellten Ausführungsbeispiels der Enfindung nachfolgend näher erläutert. Es zeigt schematisch und nicht maßstäblich ein Blockschaltbild einer Vorrichtung zur Energieversorgung in einem elektrisch betriebenen Schienenfahrzeug.

Die Energiezuführung zum Schienenfahrzeug erfolgt mittels Fahrdraht und Bahnstromabnehmer. Auf dem Dach oder im Dach des Schienenfahrzeugs ist auf einer gegenüber dem Fahrzeug, insbesondere dem übrigen Wagenkörper elektrisch isolierten Plattform ein Stromabnehmerrahmen 4 angeordnet. Zwischen dem Stromabnehmerrahmen 4 und Fahrzeug bzw. Fahrzeuginnenraum ist ein Druckluftschlauch 1 verlegt und an eine Druckluftversorgung 2 ausreichender Leistung angeschlossen. Die Druckluftversorgung 2 ist beispielsweise eine Hauptluftbehälterleitung, wie sie in Schienenfahrzeugen üblicherweise vorhanden ist. Der Druckluftschlauch 1 ist wenigstens an einer Übergangsstelle 3 zum Stromabnehmerrahmen 4 hochspannungsfest ausgebildet, z. B. ähnlich einem Druckluftversorgungsschlauch für einen Stromabnehmerbalg. Auf dem Stromabnehmerrahmen 4 befindet sich ein Luftmotor 5, dessen Welle 6 durch die zugeführte Luft rotiert. Die Welle ist in geeigneter Weise, z. B. mittels Riemengetriebe mit der Welle eines Generators 7 verbunden, so dass der Generator 7 durch den Luftmotor 5 angetrieben wird. Der Generator 7 wandelt die Rotationsenergie in elektrische Energie um. Ein Regler 8 begrenzt die Ausgangsspannung des Generators 7. Die vom Generator 7 erzeugte elektrische Energie kann den Verbrauchern direkt zugeführt oder zum Laden von Pufferakkumulatoren 9 verwendet werden.

Der Durchmesser der Luftzuführung zum Luftmotor 5 ist nach dem Verbrauch des Luftmotors 5 bei maximaler Leistung dimensioniert. Die maximale Leistung wird durch die zur Verfügung stehende Luftmenge pro Zeiteinheit begrenzt.

Der Aufbau kann durch zusätzliche Einrichtungen erweitert werden. Vorzugsweise befinden sich diese zusätzlichen Einrichtungen ebenfalls auf dem Stromabnehmerrahmen 4 oder zumindest auf der gegenüber dem Fahrzeug, insbesondere dem übrigen Wagenkörper elektrisch isolierten Plattform. Die Betriebszeit des Luftmotors 5 kann reduziert werden, wenn durch eine Einrichtung 10 gezielt ein in der Druckluftzufuhr eingebautes Magnetventil 11 angesteuert wird, so dass die Akkumulatoren 9 nur dann geladen werden, wenn deren Ausgangsspannung unter einen bestimmten Wert sinkt. Außerdem ist ein Drehzahlregelkreis für den Luftmotor 5 möglich, womit der Luftverbrauch reduziert werden kann.

Luftmotor 5 und Generator 7 können als eine Einheit in einem Gehäuse untergebracht sein und in ihrer Dimensionierung der benötigten Energiemenge angepasst werden.

## Patentansprüche

1. Verfahren zur Energieversorgung von elektrischen. Verbrauchern in Fahrzeugen, insbesondere in Schienenfahrzeugen, wobei
- die Verbraucher elektrisch leitend mit einem Stromabnehmer verbunden sind, der sich gegenüber dem Fahrzeug und dessen übriger elektrischer Ausrüstung auf Hochspannungspotential befindet, **dadurch gekennzeichnet, daß**
- eine Druckluftversorgung (2) mittels eines Druckluftschlauches (1) einen Luftmotor (5) betreibt,
- der Luftmotor (5) die Strömungsenergie der zugeführten Luft in Rotationsenergie umwandelt,
- der Luftmotor (5) mittels Mitteln zur Kraftübertragung einen Generator (7) antreibt,
- der Generator (7) die Rotationsenergie in elektrische Energie umwandelt,
- der Generator (7) die elektrischen Verbraucher betreibt und/oder Akkumulatoren (9) auflädt.

2. Verfahren nach Anspruch 1,
**dadurch gekennzeichnet, dass** eine Hauptluftbehälterleitung als Druckluftversorgung (2) einen Luftmotor (5) betreibt.

3. Verfahren nach Anspruch 1 oder 2,
**dadurch gekennzeichnet, dass** der Luftmotor (5) mittels Getriebe, insbesondere Riemengetriebe den Generator (7) antreibt.

4. Verfahren nach einem der Ansprüche 1 bis 3,
**dadurch gekennzeichnet, dass** die Ausgangsspannung des Generators (7) begrenzt und/oder geregelt wird.

5. Verfahren nach Anspruch 4,
**dadurch gekennzeichnet, dass** ein Regler (8) am Ausgang des Generators (7) die Ausgangsspannung des Generators (7) begrenzt und/oder regelt.

6. Verfahren nach Anspruch 4 oder 5,
**dadurch gekennzeichnet, dass** ein am Luftmotor (5) angeordneter Fliehkraftregler die Ausgangsspannung des Generators (7) begrenzt und/oder regelt.

7. Verfahren nach einem der Ansprüche 4 bis 6,
**dadurch gekennzeichnet, dass** vor dem Luftmotor (5) ein Mittel zur Steuerung der Druckluftzufuhr, insbesondere ein Magnetventil (11) angeordnet ist, welches die Ausgangsspannung des Generators (7) begrenzt und/oder regelt.

8. Verfahren nach einem der Ansprüche 1 bis 7,
**dadurch gekennzeichnet, dass** der Luftmotor (5) Teil eines Drehzahlregelkreises ist, wodurch die Drehzahl des Luftmotors (5) begrenzt und/oder geregelt wird.

9. Vorrichtung zur Energieversorgung von elektrischen Verbrauchern in Fahrzeugen, insbesondere in Schienenfahrzeugen, und insbesondere zur Durchführung des Verfahrens nach einem der Ansprüche 1 bis 8, bei der
- die Verbraucher elektrisch leitend mit einem Stromabnehmer verbunden sind, der sich gegenüber dem Fahrzeug und dessen übriger elektrischer Ausrüstung auf Hochspannungspotential befindet, **dadurch gekennzeichnet daß**
- an einer Druckluftversorgung (2) mittels eines Druckluftschlauches (1) ein Luftmotor (5) derart angeschlossen ist, daß eine Welle (6) des Luftmotors (5) durch die zugeführt Luft
- die Welle (6) des Luftmotors (5) mittels Mittel zur Kraftübertragung mit einer Welle eines Generator (7) verbunden ist,
- der Generator (7) mit den elektrischen Verbrauchern und/oder mit Akkumulatoren (9) verbunden ist.

10. Vorrichtung nach Anspruch 9,
**dadurch gekennzeichnet, dass** Luftmotor (5), Generator (7) und elektrische Verbraucher und/oder Akkumulatoren (9) auf einem Stromabnehmerrahmen (4) angeordnet sind.

11. Vorrichtung nach Anspruch 9 oder 10,
**dadurch gekennzeichnet, dass** der Druckluftschlauch (1) wenigstens an einer Übergangsstelle (3) zum Stromabnehmerrahmen (4) hochspannungsfest ausgebildet ist.

12. Vorrichtung nach einem der Ansprüche 9 bis 11,
**dadurch gekennzeichnet, dass** die Druckluftversorgung (2) eine Hauptluftbehälterleitung ist.

13. Vorrichtung nach einem der Ansprüche 9 bis 12,
**dadurch gekennzeichnet, dass** die Welle (6) des Luftmotors (5) mittels Getriebe, insbesondere Riemengetriebe mit der Welle des Generators (7) verbunden ist.

14. Vorrichtung nach einem der Ansprüche 9 bis 13,
**dadurch gekennzeichnet, dass** Mittel zur Begrenzung und/oder Regelung der Ausgangsspannung des Generators (7) enthalten sind.

15. Vorrichtung nach Anspruch 14,
**dadurch gekennzeichnet, dass** ein Regler (8) am Ausgang des Generators (7) angeordnet ist.

16. Vorrichtung nach Anspruch 14 oder 15,
**dadurch gekennzeichnet, dass** am Luftmotor (5) ein Fliehkraftregler angeordnet ist.

17. Vorrichtung nach einem der Ansprüche 14 bis 16,
**dadurch gekennzeichnet, dass** vor dem Luftmotor (5) ein Mittel zur Steuerung der Druckluftzufuhr, insbesondere ein Magnetventil (11) angeordnet ist.

18. Vorrichtung nach einem der Ansprüche 9 bis 17,
**dadurch gekennzeichnet, dass** der Luftmotor (5) Teil eines Drehzahlregelkreises ist.

19. Vorrichtung nach einem der Ansprüche 9 bis 18,
**dadurch gekennzeichnet, dass** Luftmotor (5) und Generator (7) als eine Einheit in einem Gehäuse untergebracht sind.

## Claims

1. A method for supplying energy to electrical consumers in vehicles, especially rail vehicles, wherein the consumers are electrically connected to a current collector that is compared with the vehicle and its other equipment at high-voltage potential, **characterized in that**
- a compressed air supply (2) drives an air motor (5) by means of a compressed air hose (1),
- the air motor (5) converts the flow energy of the imparted air to rotational energy,
- the air motor (5) drives a generator (7) by force transmission means,
- the generator (7) converts rotational energy to electrical energy and
- the generator (7) drives the electrical consumers and/or charges the accumulators (9).

2. A method according to claim 1, **characterized in that** a main air reservoir pipe is used as compressed air supply (2) to drive an air motor (5).

3. A method according to claim 1 or 2, **characterized in that** said air motor (5) drives the generator (7) by means of transmission means, particularly a belt transmission.

4. A method according to one of claims 1 to 3, **characterized in that** the output voltage from the generator (7) is limited and/or controlled.

5. A method according to claim 4, **characterized in that** a controller (8) at the output of the generator (7) limits and/or controls the output voltage.

6. A method according to claim 4 or 5, **characterized in that** a centrifugal controller arranged at the air motor (5) limits and/or controls the output voltage from the generator (7).

7. A method according to one of claims 4 to 6, **characterized in that** a means for controlling the compressed air supply, particularly a solenoid valve (11), is arranged in front of the air motor (5) to limit and/or control the output voltage from the generator (7).

8. A method according to one of claims 1 to 7, **characterized in that** the air motor (5) is part of a speed control circuit by which the rotational speed of air motor (5) is limited and/or controlled.

9. A device for supplying energy to electrical consumers in vehicles, especially rail vehicles, particularly for performing a method according to one of claims 1 to 8, wherein the consumers are electrically connected to a current collector that is compared with the vehicle, particularly the rail vehicle, and its other equipment at high-voltage potential, **characterized in that**
- an air motor (5) is connected to a compressed air supply (2) by means of a compressed air hose (1) in such a way that a shaft (6) of the air motor (5) is rotated by the imparted air,
- the shaft (6) of the air motor (5) is connected by force transmission means to a shaft of a generator (7),
- the generator (7) is connected to the electrical consumers and/or to accumulators (9).

10. A device according to claim 9, **characterized in that** air motor (5), generator (7) and electrical consumers and/or accumulators (9) are arranged on a current collector frame (4).

11. A device according to one of claims 9 or 10, **characterized in that** the compressed air hose (1) is on at least one transfer point (3) to the current collector frame (4) high-voltage resistant.

12. A device according to one of claims 9 to 11, **characterized in that** the compressed air supply (2) is a main air reservoir pipe.

13. A device according to one of claims 9 to 12, **characterized in that** the shaft (6) of the air motor (5) is connected to the shaft of the generator (7) by means of transmission means, particularly a belt transmission.

14. A device according to any of claims 9 to 13, **characterized in that** means for limiting and/or controlling the output voltage from the generator (7) are comprised.

15. A device according to claim 14, **characterized in that** a controller (8) is arranged at the output of the generator (7).

16. A device according to claim 14 or 15, **characterized in that** a centrifugal controller is arranged at the air motor (5).

17. A device according to one of claims 14 to 16, **characterized in that** means for controlling compressed air supply, particularly a solenoid valve (11) is arranged in front of the air motor (5).

18. A device according to any of claims 9 to 17, **characterized in that** the air motor (5) is part of a speed control circuit.

19. A device according to one of claims 9 to 18, **characterized in that** air motor (5) and generator (7) are located as one unit in a single housing.

## Revendications

1. Procédé d'alimentation en énergie de consommateurs électriques dans des véhicules, notamment dans des véhicules ferroviaires, les consommateurs étant reliés avec conduction électrique à un collecteur de courant qui se trouve à un potentiel de haute tension par rapport au véhicule et au reste de son équipement électrique, **caractérisé en ce que**
- une alimentation en air comprimé (2) fait fonctionner un moteur à air (5) au moyen d'un tuyau à air comprimé (1),
- le moteur à air (5) transforme l'énergie de flux de l'air acheminé en énergie de rotation,
- le moteur à air (5) entraîne un générateur (7) à l'aide de moyens de transmission de force,
- le générateur (7) transforme l'énergie de rotation en énergie électrique,
- le générateur (7) fait fonctionner les consommateurs électriques et/ou charge des accumulateurs (9).

2. Procédé selon la revendication 1, **caractérisé en ce qu'**une conduite de réservoir à air principal servant d'alimentation en air (2) fait fonctionner un moteur à air (5).

3. Procédé selon la revendication 1 ou 2, **caractérisé en ce que** le moteur à air (5) actionne le générateur (7) au moyen d'engrenages, notamment d'engrenages à courroie.

4. Procédé selon l'une quelconque des revendications 1 à 3, **caractérisé en ce que** la tension de sortie du générateur (7) est limitée et/ou régulée.

5. Procédé selon la revendication 4, **caractérisé en ce qu'**un régulateur (8) limite et/ou régule la tension de sortie du générateur (7) à la sortie du générateur (7).

6. Procédé selon la revendication 4 ou 5, **caractérisé en ce qu'**un régulateur de force centrifuge disposé sur le moteur à air (5) limite et/ou régule la tension de sortie du générateur (7).

7. Procédé selon l'une quelconque des revendications 4 à 6, **caractérisé en ce qu'**est disposé, devant le moteur à air (5), un moyen de commande de l'alimentation en air comprimé, notamment une électrovalve (11), qui limite et/ou régule la tension de sortie du générateur (7).

8. Procédé selon l'une quelconque des revendications 1 à 7, **caractérisé en ce que** le moteur à air (5) fait partie d'une boucle de réglage de régime permettant de limiter et/ou de réguler le régime du moteur à air (5).

9. Dispositif d'alimentation en énergie de consommateurs électriques dans des véhicules, notamment dans des véhicules ferroviaires, et notamment pour la réalisation du procédé selon l'une quelconque des revendications 1 à 8, dans lequel les consommateurs sont reliés avec conduction électrique à un collecteur de courant qui se trouve à un potentiel de haute tension par rapport au véhicule et au reste de son équipement électrique,
**caractérisé en ce que**
- un moteur à air (5) est raccordé à une alimentation en air comprimé (2) au moyen d'un tuyau à air comprimé (1) de manière à ce qu'un arbre (6) du moteur à air (5) soit tourné par l'air acheminé,
- l'arbre (6) du moteur à air (5) est relié à l'aide de moyens de transmission de force à un arbre d'un générateur (7),
- le générateur (7) est relié aux consommateurs électriques et/ou à des accumulateurs (9).

10. Dispositif selon la revendication 9, **caractérisé en ce que** le moteur à air (5), le générateur (7) et les consommateurs électriques et/ou accumulateurs (9) sont disposés sur un cadre de collecteur de courant (4).

11. Dispositif selon la revendication 9 ou 10, **caractérisé en ce que** le tuyau à air comprimé (1) est conçu résistant à la haute tension au moins à un point de transition (3) vers le cadre du collecteur de courant (4).

12. Dispositif selon l'une quelconque des revendications 9 à 11, **caractérisé en ce que** l'alimentation en air comprimé (2) est une conduite de réservoir à air principal.

13. Dispositif selon l'une quelconque des revendications 9 à 12, **caractérisé en ce que** l'arbre (6) du moteur à air (5) est relié au moyen d'engrenages, notamment d'engrenages à courroie, à l'arbre du générateur (7).

14. Dispositif selon l'une quelconque des revendications 9 à 13, **caractérisé en ce que** sont inclus des moyens de limitation et/ou de régulation de la tension de sortie du générateur (7).

15. Dispositif selon la revendication 14, **caractérisé en ce qu'**un régulateur (8) est disposé à la sortie du générateur (7).

16. Dispositif selon la revendication 14 ou 15, **caractérisé en ce qu'**un régulateur de force centrifuge est disposé sur le moteur à air (5).

17. Dispositif selon l'une quelconque des revendications 14 à 16, **caractérisé en ce qu'**est disposé, devant le moteur à air (5), un moyen de commande de l'alimentation en air comprimé, notamment une électrovalve (11).

18. Dispositif selon l'une quelconque des revendications 9 à 17, **caractérisé en ce que** le moteur à air (5) fait partie d'une boucle de réglage de régime.

19. Dispositif selon l'une quelconque des revendications 9 à 18, **caractérisé en ce que** le moteur à air (5) et le générateur (7) sont installés en tant qu'unité dans une enceinte.
